# EUROPÄISCHE PATENTSCHRIFT

(11) **EP 3 345 278 B1**
(45) Veröffentlichungstag und Bekanntmachung des Hinweises auf die Patenterteilung: **01.04.2020**
(21) Anmeldenummer: 16757183.5
(22) Anmeldetag: 12.08.2016
(51) Int. Cl.: H02J 3/38, H02S 10/00, H02J 3/00, G01W 1/10, G01W 1/12, H02S 10/10

(54) **VERFAHREN UND STEUEREINRICHTUNG ZUM STEUERN EINES STROMNETZES MIT EINER PHOTOVOLTAIKANLAGE**
METHOD AND CONTROL DEVICE FOR CONTROLLING A POWER NETWORK WITH A PHOTOVOLTAIC SYSTEM
PROCÉDÉ ET DISPOSITIF DE COMMANDE POUR COMMANDER UN RÉSEAU ÉLECTRIQUE AVEC UNE INSTALLATION PHOTOVOLTAÏQUE

(30) Priorität: 11.11.2015 DE 102015222210
(43) Veröffentlichungstag der Anmeldung: 11.07.2018
(73) Patentinhaber: Siemens Aktiengesellschaft, 80333 München (DE)
(72) Erfinder: SZABO, Andrei, 85521 Ottobrunn (DE); BAMBERGER, Joachim, 82131 Stockdorf (DE); MAYER, Peter, 81739 München (DE)
(86) Internationale Anmeldenummer: PCT/EP2016/069227
(87) Internationale Veröffentlichungsnummer: WO 2017/080694

(56) Entgegenhaltungen:
- EP-A2- 2 262 096
- DE-A1-102011 017 694
- DE-A1-102012 215 978
- US-A1- 2010 198 420
- US-A1- 2012 306 279

## Beschreibung

Photovoltaikanlagen gewinnen als erneuerbare Energiequellen zunehmend an Bedeutung. Naturgemäß liefert eine Photovoltaikanlage jedoch nur tagsüber Leistung. Darüber hinaus erfährt die abgegebene Leistung einen erheblichen Einbruch, wenn sich Wolken zwischen Sonne und Photovoltaikanlage schieben. Um die Netzspannung bei einem solchen Leistungseinbruch dennoch aufrechtzuerhalten, ist im Stromnetz einer Photovoltaikanlage häufig eine weitere Energiequelle zum Kompensieren des Leistungseinbruchs vorgesehen. Ein derartiger wolkenbedingter Leistungseinbruch erfolgt je nach Größe der Photovoltaikanlage verhältnismäßig schnell, typischerweise im Bereich von wenigen Sekunden, in denen sich die abgegebene Leistung z.B. auf die Hälfte oder auf ein Fünftel reduzieren kann. Zur Kompensation eines solchen raschen und starken Leistungseinbruchs sind wirksame Kompensationsmaßnahmen schnell vorzunehmen. Derartige Kompensationsmaßnahmen benötigen jedoch in der Regel eine gewisse Vorlaufzeit, in der z.B. ein kompensierender Dieselgenerator auf Betriebstemperatur gebracht wird.

Zur Sicherung einer ausreichenden Vorlaufzeit wird bisher häufig eine Wetterprognose herangezogen, um bei Vorhersage von Bewölkung eine kompensierende Maßnahme vorzubereiten, z.B. einen Dieselgenerator einzuschalten und warmlaufen zu lassen. Eine solche Wetterprognose ist jedoch hinsichtlich des genauen Zeitpunkts der Abschattung und damit des Leistungseinbruchs verhältnismäßig ungenau und daher nur für eine Groborientierung brauchbar.

Weiterhin wird häufig eine nach oben gerichtete Kamera mit einem Fischaugenobjektiv verwendet, um die Wolkenverteilung zu messen und abhängig davon eine kompensierende Maßnahme vorzubereiten. Eine zuverlässige Erkennung einer bevorstehenden Abschattung erfordert jedoch komplexe Erkennungsalgorithmen.

Die DE 10 2012 215978 A1 offenbart ein Verfahren zur Verlängerung der Lebensdauer des Wechselrichters einer elektrischen Anlage, welche einen Wechselrichter und einen einen Zwischenkreiskondensator aufweisenden Zwischenkreis aufweist. Zur Verlängerung der Lebensdauer des Wechselrichters wird eine Reduzierung der auf den Wechselrichter wirkenden Temperaturlastwechsel vorgenommen. Des Weiteren betrifft die DE 10 2012 215978 A1 eine elektrische Anlage und eine Steuer- und Regeleinheit für eine elektrische Anlage.

Die DE 10 2011 017694 A1 offenbart eine Lösung, welche die Einsetzbarkeit photovoltaischer Anlagen (PV-Anlagen) verbessert, indem Abschattungsinformationen benachbarter PV-Anlagen zur Vorhersage der von einer aktuellen PV-Anlage abgegebenen Leistung berücksichtigt werden. Insbesondere werden Wolkenbewegungen und Wolkenformen berücksichtigt. Das verbessert die Genauigkeit der Vorhersage. Hierbei ist es von Vorteil, dass kurzfristige Vorhersagen betreffend z. B. die nächsten 15 Minuten möglich sind und entsprechend rechtzeitig vor Einbruch der von der PV-Anlage abgegebenen Leistung eine Ersatz-Energiequelle aktiviert werden kann. Die in der DE 10 2011 017694 A1 offenbarte Technik kann z. B. bei erneuerbaren Energien, PV-Anlagen oder Smartgrids eingesetzt werden.

Die EP 2 262 096 A2 offenbart ein Verfahren zur Prognose einer drohenden Abschattung einer Photovoltaikanlage durch Wolkenbildung oder Wolkenbewegung. Dabei wird in einer ersten Variante ein Teil des Firmaments mittels einer Fischaugenoptik auf die Eingangsoptik einer Digitalkamera abgebildet. Es werden Pixelgruppen gebildet, die einem zugeordneten Lichtintensitätsbereich entsprechen. Der örtliche Verlauf der Gruppen wird dahingehend analysiert, ob er zu Abschattungen einer Photovoltaikanlage führen kann. Gemäß einer zweiten Variante wird eine Linie aus dem Bereich der PV-Anlage zur Sonne hin gebildet und ständig nachgeführt. Um die Linie herum wird ein Bereich festgelegt, innerhalb dessen sich eine Referenzlinie befindet. Es wird der Durchzug von Wolken über die Referenzlinie analysiert. Das Ergebnis der Analyse dient dazu, die elektrische Leistung der PV-Anlage durch Zuschalten eines Ersatzenergielieferanten auf einen Mindestwert aufzustocken oder durch Wegschalten von Verbrauchern so zu reduzieren, dass wichtige Verbraucher nicht unter einen Mindestwert an zugelieferter Energie fallen.

Die US 2010/198420 A1 offenbart, dass eine Nachverfolgung von Wolkenbewegungen verwendet wird, um die Auswirkungen einer Wolkendecke auf die Bestrahlung eines solarbetriebenen verteilten Energieerzeugungssystems vorherzusagen. Die Vorhersagen ermöglichen es einem Solarkraftwerk, die Änderungen seiner Gesamtausgangsleistung innerhalb der Betriebsanforderungen mit geringer oder ohne Abhängigkeit von Energiespeicherung, Backup-Erzeugung oder Laststeuerung beizubehalten, ermöglichen es, eine zentralisierte und/oder eine lokale Koordinierung von Solarpark-Steuerungssystemen zu verwenden, um die Speicherung optimal zu nutzen, ermöglichen es, alternierend Leistungsschwankungen ohne Cloud-Kenntnisse zu reduzieren und ermöglichen eine Echtzeit-Solarausgangsleistungsvorhersage-Funktion zu verwenden, um den Energieversorgern Vorabinformationen zu Leistungsschwankungen zur Verfügung zu stellen.

Die US 2012/306279 A1 offenbart eine Photovoltaikanlage, umfassend: einen Photovoltaikgenerator mit Strängen, die jeweils eine oder mehrere Photovoltaikzellen umfassen, einen Stromwandler, Schalter und eine Steuerung. Der Stromwandler ist dazu eingerichtet, Gleichstrom (DC), der vom Photovoltaikgenerator bereitgestellt wird, in Wechselstrom (AC) umzuwandeln und den Wechselstrom auszugeben. Jeder Schalter ist einem der Stränge zugeordnet und dazu eingerichtet, dass er den zugeordneten Strang mit dem Stromwandler verbindet, wenn er auf eine erste Einstellung eingestellt ist, so dass der von dem ersten Strang erzeugte Strom zum Stromwandler fließen kann. Die Steuerung ist dazu eingerichtet, um den von dem Photovoltaikgenerator bereitgestellten Strom durch selektives Verbinden der Stränge des Photovoltaikgenerators mit dem Stromwandler durch Steuern der Einstellungen der Schalter zu steuern.

Es ist Aufgabe der vorliegenden Erfindung, ein Verfahren, eine Steuereinrichtung, ein Computerprogrammprodukt sowie ein computerlesbares Speichermedium zum Steuern eines Stromnetzes mit einer Photovoltaikanlage anzugeben, die eine effektive Kompensation von Leistungseinbrüchen der Photovoltaikanlage erlauben.

Gelöst wird die Aufgabe durch ein Verfahren mit den Merkmalen des Patentanspruches 1, durch eine Steuereinrichtung mit den Merkmalen des Patentanspruches 9, durch ein Computerprogrammprodukt mit den Merkmalen des Patentanspruches 10 sowie durch ein computerlesbares Speichermedium mit den Merkmalen des Patentanspruches 11.

Erfindungsgemäß wird zum Steuern eines eine Photovoltaikanlage aufweisenden Stromnetzes ein zeitlicher Verlauf einer Lichtbestrahlung der Photovoltaikanlage ermittelt, und es wird ein Anstieg des zeitlichen Verlaufs gegenüber einem Regelverlauf der Lichtbestrahlung detektiert. Infolge der Detektion des Anstiegs wird eine Vorbereitungsmaßnahme zum Vorbreiten des Stromnetzes auf einen bevorstehenden Leistungseinbruch der Photovoltaikanlage eingeleitet.

Zur Durchführung des erfindungsgemäßen Verfahrens sind eine Steuereinrichtung, ein Computerprogrammprodukt sowie ein computerlesbares Speichermedium vorgesehen.

Die Erfindung macht sich unter Anderem die Beobachtung zunutze, dass eine Wolke, die sich in die Nähe der Verbindungslinie zwischen Sonne und Photovoltaikanlage bewegt, einen Teil der auf die Wolke fallenden Sonnenstrahlung reflektiert. Von dieser reflektierten Sonnenstrahlung fällt ein Teil zusätzlich auf die Photovoltaikanlage, was sich in einem Anstieg der Lichtbestrahlung der Photovoltaikanlage gegenüber dem Regelverlauf bemerkbar macht. Dieser Anstieg kann als Anzeichen für eine bevorstehende Abschattung bzw. einen Leistungseinbruch aufgefasst werden. In der Regel kann der Anstieg bereits mehrere Minuten vor dem tatsächlichen Leistungseinbruch detektiert werden.

Ein wesentlicher Vorteil der Erfindung ist darin zu sehen, dass auf einfache Weise wahrscheinlich bevorstehende Leistungseinbrüche erkannt und entsprechende Gegenmaßnahmen frühzeitig vorbereitet werden können. Durch die frühzeitige Vorbereitung können hohe und/oder sprunghafte Belastungen von anderen Komponenten des Stromnetzes vermieden oder zumindest verringert werden. Auf diese Weise kann das Stromnetz stabilisiert und eine Versorgungssicherheit erhöht werden.

Vorteilhafte Ausführungsformen und Weiterbildungen der Erfindung sind in den abhängigen Ansprüchen angegeben.

Vorteilhafterweise kann der zeitliche Verlauf der Lichtbestrahlung mittels eines Lichtsensors der Photovoltaikanlage und/oder anhand einer von der Photovoltaikanlage aktuell abgegebenen Spannung, Leistung und/oder einem abgegebenen Strom ermittelt werden. Auf diese Weise kann der zeitliche Verlauf der Lichtbestrahlung mit sehr geringem Aufwand ermittelt werden. Insbesondere die Ermittlung anhand der Spannungs-, Leistungs- und/oder Stromwerte der Photovoltaikanlage erfordert häufig keinen wesentlichen Zusatzaufwand, da z.B. die Leistung einer Photovoltaikanlage ohnehin meist fortlaufend gemessen wird.

Weiterhin umfasst die Vorbereitungsmaßnahme ein Einschalten, Warmlaufen und/oder Umparametrisieren einer weiteren Energiequelle des Stromnetzes. Als weitere Energiequelle können z.B. ein Dieselgenerator, eine Batterie, ein Fliehkraftspeicher und/oder ein konventionelles Kraftwerk, wie beispielsweise ein Gaskraftwerk, mit einstellbarer Leistungsabgabe verwendet werden. Durch die Vorbereitungsmaßnahme kann die weitere Energiequelle auf eine Leistungsabgabe bzw. Leistungskompensation vorbereitet werden. Durch die Umparametrisierung können Betriebs- und Steuerparameter der weiteren Energiequelle geändert werden, insbesondere so, dass eine kompensierende Leistung bei Eintreten des Leistungseinbruchs schnell abrufbar ist. Darüber hinaus kann die Vorbereitungsmaßnahme ein Herunterregeln und/oder ein Umparametrisieren der Photovoltaikanlage umfassen. Auf diese Weise kann ein Leistungssprung bei Eintreten des Leistungseinbruchs verringert werden. Ferner umfasst die Vorbereitungsmaßnahme ein Herunterregeln einer Verbraucherlast im Stromnetz und/oder einen Redispatch im Stromnetz. Durch den Redispatch kann eine Lastaufteilung zwischen verschiedenen Energiequellen im Stromnetz kurzfristig verändert werden.

Gemäß einer vorteilhaften Ausführungsform der Erfindung kann nach dem Einleiten der Vorbereitungsmaßnahme ein Eintreten des Leistungseinbruchs detektiert werden. Infolge dieser Detektion kann dann eine durch die Vorbereitungsmaßnahme vorbereitete Stabilisierungsmaßnahme für das Stromnetz vorgenommen werden. Als Stabilisierungsmaßnahme kann z.B. ein eingeschalteter, warmgelaufener und/oder im Wesentlichen leistungslos mitlaufender Generator in einen Modus zur Leistungsabgabe geschaltet werden und/oder eine andere Maßnahme zur Leistungskompensation vorgenommen werden.

Vorteilhafterweise wird der Regelverlauf aus dem zeitlichen Verlauf der Lichtbestrahlung ermittelt. Alternativ oder zusätzlich kann der Regelverlauf auch anhand von Annahmen über eine bei ungestörter Sonneneinstrahlung zu erwartende Lichtbestrahlung, insbesondere anhand von Annahmen über deren zeitliches Verhalten, deren Steigung und/oder deren Varianz ermittelt werden.

Dabei wird der Regelverlauf als lineare oder abschnittweise lineare Approximation an den ermittelten zeitlichen Verlauf ermittelt. Eine solche Approximation wird häufig auch als lineares bzw. abschnittsweise lineares Fitting bezeichnet. Auf diese Weise können mit geringem Aufwand unregelmäßige Schwankungen des zeitlichen Verlaufs geglättet werden und ein gleichmäßiger, als Referenzverlauf verwendbarer Regelverlauf bestimmt werden.

Vorteilhafterweise kann der Anstieg der Lichtbestrahlung detektiert werden, wenn der ermittelte zeitliche Verlauf gegenüber dem Regelverlauf einen vorgegebenen Schwellwert überschreitet. Zur weitgehenden Vermeidung von falsch positiven Prognosen kann der Schwellwert so vorgegeben werden, dass unregelmäßige, nicht wolkenbedinge Schwankungen des zeitlichen Verlaufs in der Regel unterhalb des Schwellwerts bleiben. Vorteilhafterweise kann ein Schwellwert von 0,3% bis 2% des Regelverlaufs oder des zeitlichen Verlaufs vorgegeben werden. Der Schwellwert sollte vorzugsweise unter 10% der Regelverlaufs oder des zeitlichen Verlaufs liegen, z.B. unterhalb 0.5%, 1%, 2%, 3% oder 6%, da bei vielen Gridcodes vorgeschrieben ist, bei einer Leistungsvariation von 10% pro Minute eine Leistungskompensation zwingend zuzuschalten. Wäre in diesen Fällen der Schwellwert größer oder gleich 10%, würde ein Leistungseinbruch frühestens dann detektiert, wenn die Leistungskompensation gemäß Gridcode bereits verfügbar sein müsste. Eine Vorwarnzeit entfiele in diesen Fällen.

Weiterhin kann zum Detektieren des Anstiegs der Lichtbestrahlung eine Varianz und/oder ein Gradient des zeitlichen Verlaufs ermittelt werden. Die Varianz und/oder der Gradient kann hierbei insbesondere relativ zum Regelverlauf ermittelt werden. Für die Varianz und/oder den Gradienten kann jeweils ein Schwellwert vorgegeben werden, bei dessen Überschreitung der Anstieg der Lichtbestrahlung detektiert wird. Für die Vorgabe der Schwellwerte für die Varianz und/oder den Gradienten gelten die oben für die Vorgabe des Schwellwerts für den zeitlichen Verlauf gemachten Ausführungen und Vorgabewerte.

Darüber hinaus kann der Anstieg der Lichtbestrahlung mittels eines Mustererkennungsverfahrens, eines Signalfilters und/oder eines neuronalen Netzes detektiert werden. Auf diese Weise können auch komplexe Muster im zeitlichen Verlauf der Lichtbestrahlung erkannt werden, wodurch sich Leistungseinbrüche häufig genauer vorhersagen lassen.

Nach einer vorteilhaften Weiterbildung der Erfindung kann anhand eines im zeitlichen Verlauf detektierten Verlaufsmusters ein Wert für eine Vorwarnzeit ermittelt werden. Die Vorbereitungsmaßnahme kann dann abhängig vom ermittelten Wert für die Vorwarnzeit eingeleitet werden. So kann beispielsweise bei kürzerer Vorwarnzeit die Photovoltaikanlage schneller herunter geregelt und/oder ein Generator schneller auf Betriebstemperatur gebracht werden.

Ferner kann der Anstieg der Lichtbestrahlung als Prognose eines bevorstehenden Leistungseinbruchs der Photovoltaikanlage bewertet und ein entsprechendes Prognosesignal ausgegeben werden.

Ein Ausführungsbeispiel der Erfindung wird nachfolgend anhand der Zeichnung näher erläutert. Dabei zeigen jeweils in schematischer Darstellung
- Figur 1: eine Veranschaulichung einer Wirkungsweise der Erfindung,
- Figur 2: ein Stromnetz mit einer Photovoltaikanlage und einen Stromgenerator,
- Figur 3: einen zeitlichen Verlauf der Lichtbestrahlung der Photovoltaikanlage und
- Figur 4: den Verlauf der Lichtbestrahlung in höherer zeitlicher Auflösung.

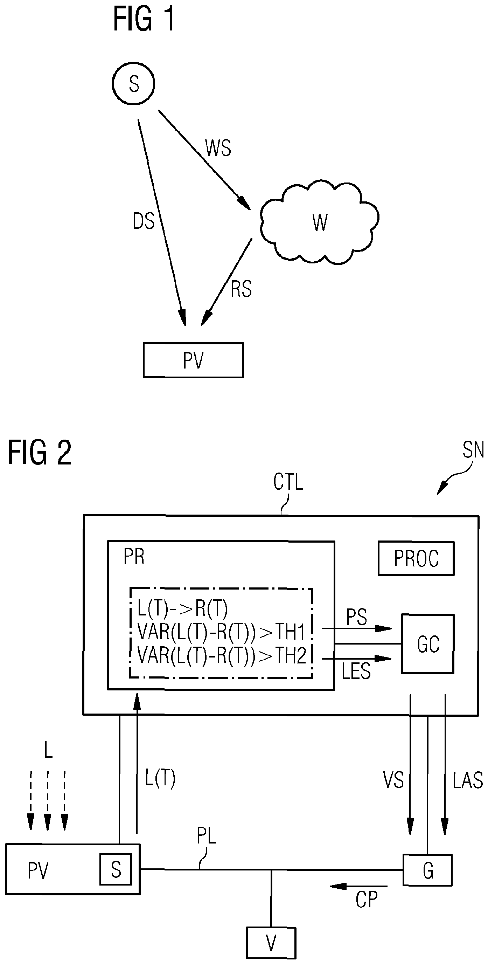

Zur Veranschaulichung eines wesentlichen Wirkungsprinzips der Erfindung zeigt Figur 1 eine von der Sonne S beschienene Photovoltaikanlage PV in schematischer Darstellung. Entlang einer Verbindungslinie zwischen der Sonne S und der Photovoltaikanlage PV fällt direkte Sonnenstrahlung DS auf die Photovoltaikanlage PV. Sobald sich eine Wolke W in die Nähe dieser Verbindungslinie schiebt, wird ein Teil der auf die Wolke W fallenden Sonnenstrahlung WS an der Wolke W reflektiert und fällt als reflektierte Sonnenstrahlung RS zusätzlich auf die Photovoltaikanlage PV. Die reflektierte Sonnenstrahlung RS addiert sich zur direkten Sonnenstrahlung DS, so dass sich die gesamte Lichtbestrahlung der Photovoltaikanlage PV bei Annäherung der Wolke W an die Verbindungslinie kurzzeitig erhöht. Dieser Anstieg der Lichtbestrahlung kann als Anzeichen für eine bevorstehende Abschattung und damit für einen bevorstehenden Leistungseinbruch der Photovoltaikanlage PV aufgefasst werden. In der Regel kann der Anstieg bereits mehrere Minuten vor dem tatsächlichen Leistungseinbruch detektiert werden.

Während des tatsächlichen Leistungseinbruchs sinkt die von der Photovoltaikanlage PV abgegebene Leistung in der Regel innerhalb weniger Sekunden auf ein erheblich geringeres Niveau. Durch die Detektion des Anstiegs können Gegenmaßnahmen gegen den bevorstehenden Leistungseinbruch mit einer Vorwarnzeit von in der Regel mehreren Minuten frühzeitig eingeleitet werden. Dagegen bleibt bei ausschließlicher Detektion des tatsächlich stattfindenden Leistungseinbruchs nur eine erheblich kürzere Reaktionszeit von wenigen Sekunden, um geeignete Gegenmaßnahmen vorzunehmen.

Figur 2 zeigt ein Stromnetz SN, z.B. ein Stromversorgungsnetz, Übertragungsnetz, Verteilnetz, Einspeisenetz oder Inselnetz mit einer Photovoltaikanlage PV in schematischer Darstellung. Das Stromnetz SN verfügt im vorliegenden Ausführungsbeispiel über einen Stromgenerator G, z.B. einen Dieselgenerator als konventionelle Energiequelle. Das Stromnetz SN kann dabei insbesondere ein sogenanntes Stand-Alone-Power-System sein. Alternativ oder zusätzlich zum Stromgenerator G können z.B. ein Gaskraftwerk, ein Kernkraftwerk, eine Batterie und/oder ein Fliehkraftspeicher zur Kompensation von Leistungseinbrüchen der Photovoltaikanlage PV vorgesehen sein. Die Photovoltaikanlage PV ist mit dem Stromgenerator G und einer Verbraucherlast V durch Stromleitungen PL verbunden bzw. vernetzt, die in Figur 2 durch verdickte Linien angedeutet sind.

Die Photovoltaikanlage PV ist einer Lichtbestrahlung L ausgesetzt, die sich - wie in Zusammenhang mit Figur 1 erläutert - aus direkter Sonnenstrahlung DS und reflektierter Sonnenstrahlung RS zusammensetzen kann. Die Photovoltaikanlage PV verfügt über einen Sensor S zum Ermitteln eines zeitlichen Verlaufs L(T) der Lichtbestrahlung L. Der Sensor S kann ein Leistungssensor zum Messen der von der Photovoltaikanlage abgegebenen Leistung und/oder ein Lichtsensor zum Messen der Lichtbestrahlung L der Photovoltaikanlage PV sein.

Zur Bestimmung des zeitlichen Verlaufs L(T) genügt im Wirkungszusammenhang der Erfindung eine Messung eines relativen Verlaufs der Lichtbestrahlung L mit beliebiger Bezugsgröße oder in beliebigen Einheiten. Falls der Sensor S als Lichtsensor implementiert ist, kann ein zeitlicher Verlauf von dessen Beleuchtungsstärke als zeitlicher Verlauf L(T) verwendet werden. Falls der Sensor S als Leistungssensor implementiert ist, kann entsprechend die gemessene abgegebene Leistung der Photovoltaikanlage PV, die im Allgemeinen direkt proportional zu deren Lichtbestrahlung ist, als zeitlicher Verlauf L(T) verwendet werden.

Der zeitliche Verlauf L(T) wird von der Photovoltaikanlage PV zu einer Steuereinrichtung CTL des Stromnetzes SN übermittelt. Die Steuereinrichtung CTL dient zum Steuern des Stromnetzes SN, insbesondere zum Steuern der Photovoltaikanlage PV und des Stromgenerators G. Dementsprechend ist die Steuereinrichtung CTL mit der Photovoltaikanlage PV und dem Stromgenerator G gekoppelt.

Die Steuereinrichtung CTL verfügt über einen oder mehrere Prozessoren PROC zum Ausführen der zum Steuern erforderlichen Verfahrensschritte, über eine Generatorsteuerung GC zum Steuern des Stromgenerators G sowie über eine Prognoseeinrichtung PR zur Vorhersage eines bevorstehenden Leistungseinbruchs der Photovoltaikanlage PV anhand des zeitlichen Verlaufs L(T).

Zur Vorhersage des Leistungseinbruchs ermittelt die Prognoseeinrichtung PR zunächst aus dem zeitlichen Verlauf L(T) einen Regelverlauf R(T). Hierzu wird in vorgegebenen, aufeinanderfolgenden ersten Zeitfenstern jeweils eine lineare oder abschnittsweise lineare Approximation zu L(T) berechnet. Auf diese Weise werden unregelmäßige und zufällige Schwankungen des zeitlichen Verlaufs L(T) im Regelverlauf R(T) geglättet.

Anhand des ermittelten Regelverlaufs R(T) wird ein Anstieg des zeitlichen Verlaufs L(T) gegenüber dem Regelverlauf R(T) detektiert. Hierzu wird beispielsweise eine Varianz VAR des zeitlichen Verlaufs L(T) gegenüber dem Regelverlauf R(T) berechnet. Im vorliegenden Ausführungsbeispiel wird eine Differenz L(T)-R(T) gebildet und davon in aufeinanderfolgenden, zweiten Zeitfenstern von z.B. 60 Sekunden Länge jeweils die Varianz der Differenz L(T)-R(T) berechnet. Die so ermittelte Varianz VAR wird in einem jeweiligen zweiten Zeitfenster mit einem ersten Schwellwert TH1 verglichen. Der erste Schwellwert TH1 kann z.B. 1 % des aktuellen Regelverlaufs R(T) oder zeitlichen Verlaufs L(T) betragen. Wenn die Varianz VAR größer als der erste Schwellwert TH1 ist, wird auf einen relevanten Anstieg der Lichtbestrahlung L geschlossen, d.h. ein Anstieg detektiert und infolgedessen ein Prognosesignal PS ausgegeben. Das Prognosesignal PS dient als Warnsignal für einen bevorstehenden, wolkenbedingten Leistungseinbruch der Photovoltaikanlage PV mit einer Vorwarnzeit von in der Regel mehreren Minuten.

Anstelle der Varianz VAR oder zusätzlich zu ihr kann zur Detektion des Anstiegs auch ein Gradient und/oder der Anstieg des zeitlichen Verlaufs L(T) gegenüber dem Regelverlauf R(T) verwendet werden. Weiterhin kann durch Erkennung von spezifischen Verlaufsmustern im zeitlichen Verlauf L(T) ein Wert für eine Vorwarnzeit geschätzt werden.

Das Prognosesignal PS wird von der Prognoseeinrichtung PR zur Generatorsteuerung GC übermittelt. Dies veranlasst die Generatorsteuerung GC dazu, eine Vorbereitungsmaßnahme zum Vorbereiten des Stromnetzes SN auf den prognostizierten Leistungseinbruch einzuleiten. Die Vorbereitungsmaßnahme kann gegebenenfalls abhängig von einer ermittelten Vorwarnzeit eingeleitet werden. Im vorliegenden Ausführungsbeispiel wird ein Vorbereitungssignal VS von der Generatorsteuerung GC zum Stromgenerator G übermittelt, durch das der Stromgenerator G eingeschaltet, umparametrisiert und/oder zum Warmlaufen veranlasst wird. Die vorstehende Vorbereitungsmaßnahme wird zu einem Zeitpunkt eingeleitet, an dem noch keine wesentliche kompensierende Leistungsabgabe des Stromgenerators G erforderlich ist, so dass eine nachfolgende Leistungsanforderung nicht unvorbereitet eintritt. Als weitere Vorbereitungsmaßnahme kann die Leistung der Photovoltaikanlage PV heruntergeregelt werden, so dass ein Leistungssprung bei Eintreten des Leistungseinbruchs verringert wird.

Zur Detektion des Eintretens des Leistungseinbruchs wird die Varianz VAR fortlaufend mit einem zweiten Schwellwert TH2 vergleichen. Wenn oder sobald die Varianz VAR größer als der zweite Schwellwert TH2 ist, wird das Eintreten des Leistungseinbruchs festgestellt und infolgedessen von der Prognoseeinrichtung PR ein Signal LES zur Generatorsteuerung GC übermittelt. Das Signal LES zeigt hierbei das tatsächliche Eintreten des Leistungseinbruchs an. Anstelle der Varianz VAR oder zusätzlich zur Varianz VAR kann zur Detektion des Eintretens des Leistungseinbruchs auch ein Gradient oder der Anstieg des zeitlichen Verlaufs L(T) gegenüber dem Regelverlauf R(T) verwendet werden. Der zweite Schwellwert TH2 kann z.B. 10 % des aktuellen Regelverlaufs R(T) betragen.

Durch das Signal LES wird die Generatorsteuerung GC dazu veranlasst, eine durch die obige Vorbereitungsmaßnahme vorbereitete Stabilisierungsmaßnahme oder Kompensationsmaßnahme für das Stromnetz SN vorzunehmen. Zu diesem Zweck wird im vorliegenden Ausführungsbeispiel ein Leistungsabgabesignal LAS von der Generatorsteuerung GC zum Stromgenerator G übermittelt. Durch das Leistungsabgabesignal LAS wird der Stromgenerator zur vorbereiteten, den Leistungseinbruch der Photovoltaikanlage PV kompensierenden Leistungsabgabe veranlasst. Infolgedessen speist der Stromgenerator G eine den Leistungseinbruch der Photovoltaikanlage PV kompensierende Leistung CP in das Stromnetz SN ein, um dieses zu stabilisieren.

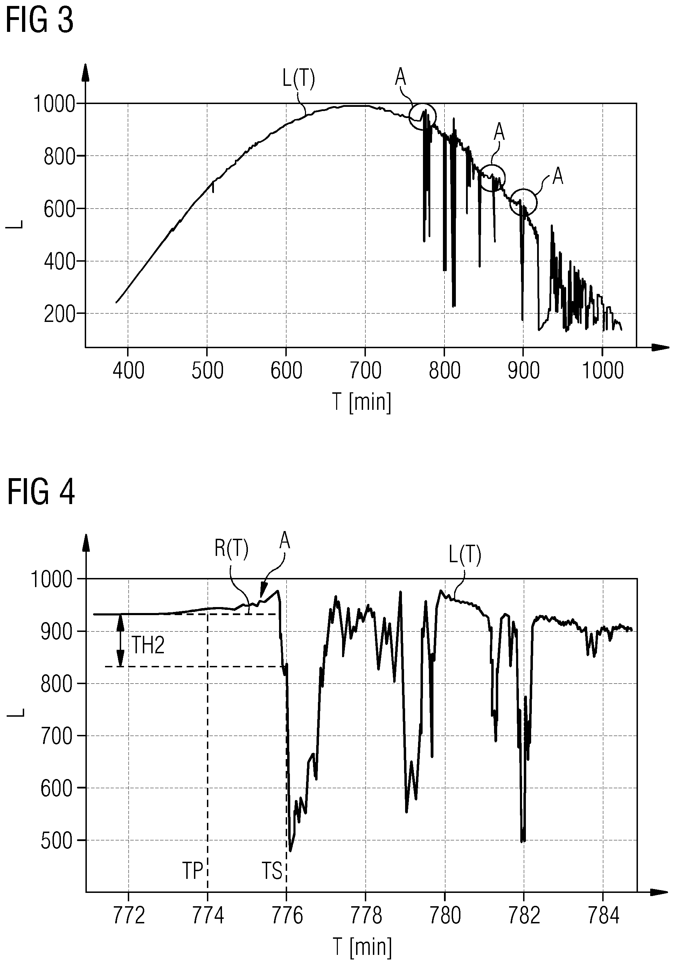

Figur 3 zeigt ein Diagramm eines gemessenen zeitlichen Verlaufs L(T) der Lichtbestrahlung der Photovoltaikanlage PV. Die Ordinate des Diagramms gibt hierbei die Lichtbestrahlung L in willkürlichen Einheiten und die Abszisse die Zeit T in Minuten an.

Es ist leicht zu erkennen, dass die Sonne bis ca. zur Minute 760 ungehindert die Photovoltaikanlage PV bestrahlt. Ca. ab Minute 770 sind starke wolkenbedingte Einbrüche der Lichtbestrahlung L und damit der Leistungsausbeute der Photovoltaikanlage PV festzustellen.

Wie in Figur 3 deutlich zu erkennen, kündigen sich die Leistungseinbrüche in der Regel deutlich durch kurzzeitige Anstiege der Lichtbestrahlung L(T) an. Einige beispielhafte Anstiege A der Lichtbestrahlung L(T) sind in Figur 3 durch Kreise hervorgehoben.

Figur 4 zeigt den in Figur 3 dargestellten Verlauf L(T) der Lichtbestrahlung in höherer zeitlicher Auflösung in der Nähe des ersten Leistungseinbruchs, der in etwa in Minute 776 eintritt. Bis Minute 773 verläuft die Lichtbestrahlung L(T) verhältnismäßig gleichmäßig, so dass ein nahezu konstanter linearisierter Regelverlauf R(T) aus dem Verlauf L(T) der Lichtbestrahlung ermittelt wird. Ca. ab Minute 773 ist ein Anstieg A des Verlaufs der Lichtbestrahlung L(T) gegenüber dem ermittelten Regelverlauf R(T) deutlich zu erkennen. Sobald der Verlauf L(T) gegenüber dem Regelverlauf R(T) den ersten Schwellwert TH1 (in Figur 4 nicht dargestellt) überschreitet, wird der Anstieg A detektiert. Mit dem für das vorliegende Ausführungsbeispiel gewählten ersten Schwellwert TH1 von 1 % findet diese Detektion des Anstiegs A zum Zeitpunkt TP, hier ca. bei Minute 774, statt. Infolgedessen werden zu diesem Zeitpunkt TP das Prognosesignal PS sowie das Vorbereitungssignal VS zum Einleiten der oben beschriebenen Vorbereitungsmaßnahmen für den bevorstehenden Leistungseinbruch ausgegeben.

Darüber hinaus wird die Abweichung des Verlaufs L(T) der Lichtbestrahlung gegenüber dem Regelverlauf R(T) fortlaufend geprüft, um das tatsächliche Eintreten des Leistungseinbruchs zu detektieren. Im vorliegenden Ausführungsbeispiel wird zu diesem Zweck geprüft, ob die Varianz der Abweichung des Verlaufs L(T) gegenüber dem Regelverlauf R(T) den zweiten Schwellwert TH2, hier 10 %, überschreitet. Im vorliegenden Ausführungsbeispiel findet eine solche Überschreitung beim Zeitpunkt TS, ca. bei Minute 776, statt, wodurch das tatsächliche Eintreten des Leistungseinbruchs detektiert wird und infolgedessen die oben beschriebenen Stabilisierungsmaßnahmen bzw. Kompensationsmaßnahmen vorgenommen werden.

Im vorliegenden Fall beträgt die Vorwarnzeit, d.h. der Zeitabstand zwischen dem Zeitpunkt TP der Detektion des Anstiegs und dem Zeitpunkt TS der Detektion des Eintretens des Leistungseinbruchs ca. zwei Minuten. In dieser Zeit kann ein kompensierender Dieselgenerator eingeschaltet und ohne weiteres auf ausreichende Betriebstemperatur gebracht werden.

Tatsächlich zeigte eine längere Messreihe, dass die Vorwarnzeit bei typischen Betriebsbedingungen in 66 % der Fälle mehr als vier Minuten und nur in 14 % der Fälle weniger als 90 Sekunden beträgt. Insbesondere ist die Vorwarnzeit bzw. der Zeitabstand zwischen Einleiten der Vorbereitungsmaßnahme und Detektion des tatsächlichen Leistungseinbruchs in der Regel wesentlich größer als die Zeitintervalle, in denen die Lichtbestrahlung L(T) während eines Leistungseinbruchs signifikant zurückgeht. Wie in Figur 4 erkennbar ist, halbiert sich die Lichtbestrahlung L(T) beim ersten Leistungseinbruch innerhalb von ca. 20 Sekunden und damit viel zu schnell, um ohne Vorwarnung z.B. einen Dieselgenerator einzuschalten und auf Betriebstemperatur zu bringen. Dagegen kann mittels der Erfindung eine Stabilisierungsmaßnahme erheblich länger vorbereitet werden, als wenn erst beim tatsächlichen Eintreten des Leistungseinbruchs, der in der Regel eine Reaktion innerhalb von Sekunden erfordert, gegengesteuert würde.

Die Erfindung erfordert in der Regel keine zusätzlichen Messeinrichtungen bei der Photovoltaikanlage PV, da sich deren Lichtbestrahlung in ihrer Leistungsabgabe direkt niederschlägt und die Leistungsabgabe ohnehin fortlaufend gemessen wird. Die Detektion der Anstiege kann mit üblichen Mitteln der Signalverarbeitung und mittels den in Stromnetzen und Photovoltaikanlagen vorhandenen Prozessoren durchgeführt werden.

Durch die Erfindung kann die Versorgungssicherheit erhöht werden, da Leistungseinbrüche frühzeitig erkannt und Gegenmaßnahmen frühzeitig eingeleitet werden können. Die Erfindung ist auch in Stromnetzen, in denen ein Speicher zum Abfangen von Leistungseinbrüchen vorhanden ist, vorteilhaft anwendbar, weil durch die Vorwarnung kompensierende Generatoren frühzeitig eingeschaltet werden können. Auf diese Weise können tiefe Entladungszyklen der Speicher zumindest teilweise vermieden werden, was wiederum eine Speicheralterung oder Speicherabnutzung reduziert.

## Patentansprüche

1. Verfahren zum Steuern eines eine Photovoltaikanlage (PV) aufweisenden Stromnetzes (SN) mit einer Steuereinrichtung (CTL) umfassend eine Prognoseeinrichtung (PR), wobei
a) ein zeitlicher Verlauf (L(T)) einer Lichtbestrahlung (L) der Photovoltaikanlage (PV) ermittelt wird,
b) ein Anstieg (A) des zeitlichen Verlaufs (L(T)) gegenüber einem Regelverlauf (R(T)) der Lichtbestrahlung (L) mit der Prognoseeinrichtung (PR) detektiert wird, wobei der Regelverlauf (R(T)) aus dem zeitlichen Verlauf (L(T)) der Lichtbestrahlung (L) ermittelt wird, wobei der Regelverlauf (R(T)) als lineare oder abschnittweise lineare Approximation an den ermittelten zeitlichen Verlauf (L(T)) der Lichtbestrahlung (L) mit der Prognoseeinrichtung (PR) ermittelt wird, und
c) infolge der Detektion des Anstiegs (A) eine Vorbereitungsmaßnahme (VS) zum Vorbreiten des Stromnetzes (SN) auf einen bevorstehenden Leistungseinbruch der Photovoltaikanlage (PV) eingeleitet wird, wobei die Vorbereitungsmaßnahme ein Einschalten, Warmlaufen und/oder Umparametrisieren einer weiteren Energiequelle (G) des Stromnetzes (SN), ein Herunterregeln einer Verbraucherlast (V) im Stromnetz (SN) und/oder einen Redispatch im Stromnetz (SN) umfasst.

2. Verfahren nach Anspruch 1, **dadurch gekennzeichnet,**
**dass** der zeitliche Verlauf (L(T)) der Lichtbestrahlung (L) mittels eines Lichtsensors (S) der Photovoltaikanlage (PV) und/oder anhand einer von der Photovoltaikanlage (PV) aktuell abgegebenen Spannung, Leistung und/oder einem abgegebenen Strom ermittelt wird.

3. Verfahren nach einem der vorhergehenden Ansprüche, **dadurch gekennzeichnet,**
**dass** nach dem Einleiten der Vorbereitungsmaßnahme (VS) ein Eintreten des Leistungseinbruchs detektiert wird, und
**dass** infolge der Detektion des Eintretens des Leistungseinbruchs eine durch die Vorbereitungsmaßnahme (VS) vorbereitete Stabilisierungsmaßnahme (LAS) für das Stromnetz (SN) vorgenommen wird.

4. Verfahren nach einem der vorhergehenden Ansprüche, **dadurch gekennzeichnet,**
**dass** der Anstieg (A) der Lichtbestrahlung (L) detektiert wird, wenn der ermittelte zeitliche Verlauf (L(T)) gegenüber dem Regelverlauf (R(T)) einen vorgegebenen Schwellwert (TH1) überschreitet.

5. Verfahren nach einem der vorhergehenden Ansprüche, **dadurch gekennzeichnet,**
**dass** zum Detektieren des Anstiegs (A) der Lichtbestrahlung (L) eine Varianz (VAR) und/oder ein Gradient des zeitlichen Verlaufs (L(T)) ermittelt wird.

6. Verfahren nach einem der vorhergehenden Ansprüche, **dadurch gekennzeichnet,**
**dass** der Anstieg (A) der Lichtbestrahlung (L) mittels eines Mustererkennungsverfahrens, eines Signalfilters und/oder eines neuronalen Netzes detektiert wird.

7. Verfahren nach einem der vorhergehenden Ansprüche, **dadurch gekennzeichnet,**
**dass** anhand eines im zeitlichen Verlauf (L(T)) detektierten Verlaufsmusters ein Wert für eine Vorwarnzeit ermittelt wird, und
**dass** die Vorbereitungsmaßnahme (VS) abhängig vom ermittelten Wert für die Vorwarnzeit eingeleitet wird.

8. Verfahren nach einem der vorhergehenden Ansprüche, **dadurch gekennzeichnet, dass**
der Anstieg (A) der Lichtbestrahlung (L) als Prognose eines bevorstehenden Leistungseinbruchs der Photovoltaikanlage (PV) bewertet wird und ein entsprechendes Prognosesignal (PS) von der Prognoseeinrichtung (PR) ausgegeben wird.

9. Steuereinrichtung (CTL) umfassend Mittel zum Steuern eines eine Photovoltaikanlage (PV) aufweisenden Stromnetzes (SN) und eine Prognoseeinrichtung zur Vorhersage eines bevorstehenden Leistungseinbruchs der Photovoltaikanlage (PV), die dazu eingerichtet sind, die Schritte des Verfahrens nach einem der Ansprüche 1 bis 8 auszufuhren.

10. Computerprogrammprodukt, umfassend Befehle, die bewirken, dass die Steuereinrichtung des Anspruchs 9 die Verfahrensschritte nach einem der Ansprüche 1 bis 8 ausführt.

11. Computerlesbares Speichermedium, auf dem das Computerprogrammprodukt nach Anspruch 11 gespeichert ist.

## Claims

1. Method for controlling a power supply network (SN) having a photovoltaic system (PV) with a control device (CTL) comprising a forecasting device (PR), wherein
a) a time profile (L(T)) of a light irradiation (L) of the photovoltaic system (PV) is ascertained,
b) an increase (A) in the time profile (L(T)) in relation to a control profile (R(T)) of the light irradiation (L) is detected with the forecasting device (PR), wherein the control profile (R(T)) is ascertained from the time profile (L(T)) of the light irradiation (L), wherein the control profile (R(T)) is ascertained with the forecasting device (PR) as a linear approximation, or an approximation which is linear in sections, of the ascertained time profile (L(T)) of the light irradiation (L), and
c) as a result of the detection of the increase (A), a preparatory measure (VS) is initiated in order to prepare the power supply network (SN) for an imminent drop in power of the photovoltaic system (PV), wherein the preparatory measure comprises switching on, warming up and/or reparametrizing a further energy source (G) of the power supply network (SN), stepping down a consumer load (V) in the power supply network (SN) and/or redispatching in the power supply network (SN).

2. Method according to Claim 1, **characterized in that** the time profile (L(T)) of the light irradiation (L) is ascertained by means of a light sensor (S) of the photovoltaic system (PV) and/or on the basis of a voltage or power which is currently being output by the photovoltaic system (PV) and/or an output current.

3. Method according to one of the preceding claims, **characterized in that**, after the initiation of the preparatory measure (VS), an occurrence of the drop in power is detected, and **in that**, as a result of the detection of the occurrence of the drop in power, a stabilization measure (LAS) which is prepared by the preparatory measure (VS) is performed for the power supply network (SN).

4. Method according to one of the preceding claims, **characterized in that** the increase (A) in the light irradiation (L) is detected when the ascertained time profile (L(T)) in relation to the control profile (R(T)) exceeds a prespecified threshold value (TH1).

5. Method according to one of the preceding claims, **characterized in that** a variance (VAR) and/or a gradient of the time profile (L(T)) are/is ascertained in order to detect the increase (A) in the light irradiation (L).

6. Method according to one of the preceding claims, **characterized in that** the increase (A) in the light irradiation (L) is detected by means of a pattern identification method, a signal filter and/or a neural network.

7. Method according to one of the preceding claims, **characterized in that** a value for a pre-warning time is ascertained on the basis of a profile pattern which is detected in the time profile (L(T)), and **in that** the preparatory measure (VS) is initiated depending on the ascertained value for the pre-warning time.

8. Method according to one of the preceding claims, **characterized in that** the increase (A) in the light irradiation (L) is evaluated as a forecast of an imminent drop in power in the photovoltaic system (PV) and a corresponding forecasting signal (PS) is output by the forecasting device (PR) .

9. Control device (CTL) comprising means for controlling a power supply network (SN) which has a photovoltaic system (PV) and comprising a forecasting device for predicting an imminent drop in power in the photovoltaic system (PV), which are designed in order to execute the steps of the method according to one of Claims 1 to 8.

10. Computer program product, comprising commands that cause the control device of Claim 9 to execute the method steps according to one of Claims 1 to 8.

11. Computer-readable storage medium in which the computer program product according to Claim 11 is stored.

## Revendications

1. Procédé pour commander un réseau électrique (SN) avec une installation photovoltaïque (PV) comprenant un dispositif de commande (CTL) comprenant un dispositif de pronostic (PR), dans lequel
a) un tracé temporel (L-(T)) d'un rayonnement lumineux (L) de l'installation photovoltaïque (PV) est calculé,
b) une hausse (A) du tracé temporel (L(T)) par rapport à un tracé de réglage (R(T)) du rayonnement lumineux (L) est détectée avec le dispositif de pronostic (PR), dans lequel le tracé de réglage (R(T)) est calculé à partir du tracé temporel (L-(T)) du rayonnement lumineux (L), dans lequel le tracé de réglage (R(T)) est calculé avec le dispositif de pronostic (PR) en tant qu'approximation linéaire ou linéaire par tronçons sur le tracé temporel (L-(T)) calculé du rayonnement lumineux (L), et
c) à la suite de la détection de la hausse (A), une mesure de préparation (VS) pour préparer le réseau électrique (SN) à une baisse de puissance imminente de l'installation photovoltaïque (PV) est introduite, dans lequel la mesure de préparation comprend une mise en marche, un échauffement et/ou un reparamétrage d'une autre source d'énergie (G) du réseau électrique (SN), une diminution d'une charge de consommateur (V) dans le réseau électrique (SN) et/ou une redistribution dans le réseau électrique (SN).

2. Procédé selon la revendication 1, **caractérisé en ce que** le tracé temporel (L-(T)) du rayonnement lumineux (L) est calculé au moyen d'un photocapteur (S) de l'installation photovoltaïque (PV) et/ou à l'aide d'une tension, puissance et/ou courant délivré(s) de l'installation photovoltaïque (PV).

3. Procédé selon l'une des revendications précédentes, **caractérisé en ce qu'**après l'introduction de la mesure de préparation (VS), une survenue de la baisse de puissance est détectée, et qu'à la suite de la détection de la survenue de la baisse de puissance, une mesure de stabilisation (LAS) préparée par la mesure de préparation (VS) est entreprise pour le réseau électrique (SN).

4. Procédé selon l'une des revendications précédentes, **caractérisé en ce que** la hausse (A) du rayonnement lumineux (L) est détectée lorsque le tracé temporel (L(T)) calculé par rapport au tracé de réglage (R(T)) dépasse une valeur seuil (TH1) prédéfinie.

5. Procédé selon l'une des revendications précédentes, **caractérisé en ce que** pour détecter la hausse (A) du rayonnement lumineux (L), une variante (VAR) et/ou un gradient du tracé temporel (L(T)) est déterminé(e).

6. Procédé selon l'une des revendications précédentes, **caractérisé en ce que** la hausse (A) du rayonnement lumineux (L) est détectée au moyen d'un procédé de détection de modèle, d'un filtre de signal et/ou d'un réseau neuronal.

7. Procédé selon l'une des revendications précédentes, **caractérisé en ce qu'**à l'aide d'un modèle de tracé détecté dans le tracé temporel (L(T)), une valeur est calculée pour un délai de pré-avertissement,
et
**en ce que** la mesure de préparation (VS) est introduite en fonction de la valeur calculée pour le délai de pré-avertissement.

8. Procédé selon l'une des revendications précédentes, **caractérisé en ce que** la hausse (A) du rayonnement lumineux (L) est évaluée en tant que pronostic d'une baisse de puissance imminente de l'installation photovoltaïque (PV) et un signal de pronostic (PS) correspondant est émis par le dispositif de pronostic (PR).

9. Dispositif de commande (CTL) comprenant des moyens pour commander un réseau électrique (SN) avec une installation photovoltaïque (PV) et un dispositif de pronostic pour prévoir une baisse de puissance imminente de l'installation photovoltaïque (PV), qui sont conçus pour exécuter les étapes du procédé selon l'une des revendications 1 à 8.

10. Produit de programme informatique, comprenant des commandes qui ont pour effet que le dispositif de commande de la revendication 9, exécute les étapes de procédé selon l'une des revendications 1 à 8.

11. Support d'enregistrement lisible par ordinateur, sur lequel le produit de programme informatique selon la revendication 11 est enregistré.
